# EUROPEAN PATENT SPECIFICATION

(11) **EP 1 258 454 B1**
(45) Date of publication and mention of the grant of the patent: **27.04.2005**
(21) Application number: 01500122.5
(22) Date of filing: 17.05.2001
(51) Int. Cl.: C01B 15/08

(54) **Process for obtaining granules of a stable adduct of sodium sulphate and hydrogen peroxide containing sodium chloride**
Verfahren zur Herstellung von Körnchen eines stabilen Adduktes von Natriumsulfat und Wasserstoffperoxid das auch Natriumchlorid enthält
Procédé de production de granules d'un produit d'addition de sulphate de sodium et de péroxyde d'hydrogène stable, contenant du chlorure de sodium

(43) Date of publication of application: 20.11.2002
(73) Proprietor: FMC Foret S.A., 08174 Sant Cugat del Vallés (Barcelona) (ES)
(72) Inventor: Forner Benito, Juan, 08008 Barcelona (ES); Artigas Puerto, Ramon, 08008 Barcelona (ES)
(74) Representative: Esteban Perez-Serrano, Maria Isabel

(56) References cited:
- US-A- 3 979 312
- US-A- 4 005 182
- US-A- 4 323 465
- US-A- 4 400 367
- US-A- 4 618 445

## Description

### FIELD OF THE INVENTION

The invention relates to a procedure for obtaining a stable adduct of Na₂SO₄ and H₂O₂ containing NaCl, in the form of granules, that comprises the direct mixing and granulation of the reactants.

### BACKGROUND OF THE INVENTION

Traditionally, sodium perborate (SPB) has been used as a whitener in washing powders. To the benefit of the manufacturers of washing powders, SPB has ceded terrain in the market to sodium percarbonate (SPC), which is less stable but cheaper.

Both persalts, in aqueous solution, give rise to a strong alkalinity that limits their field of application. To palliate this disadvantage, it was decided to obtain adducts of H₂O₂ and neutral salts such as Na₂SO₄. Thus, various adducts are known, of generic formula Na₂SO₄.mH₂O₂.nH₂O, where m = 0.5 -2 and n = 0 - 1, the stability of which is insufficient to give them a practical use.

4Na₂SO₄.2H₂O₂.NaCl (SPS) is an adduct obtained in aqueous solution by reaction of Na₂SO₄, NaCl and H₂O₂, as described in the US patents US 3.979.313 and US 4.005.182. This crystalline compound has good properties as a whitener, dissolves quickly and its solubility in cold water is high. In addition, it is prepared from non-toxic salts that are abundant, cheap and used regularly in washing powder formulations. Nevertheless, it is not directly applicable to washing powders because it is unstable in the presence of alkaline salts. FMC Corp. (US 4.323.465) have stabilised the adduct to allow its application in alkaline media through the incorporation of traces of organic polyphosphonates, for example, DEQUEST 2000 and DEQUEST 2010, into its crystalline structure.

In other subsequent patents, such as US 4.618.445, other stabilisation procedures were mentioned that, either are complex, such as coating with aluminium stearate, or suppose the addition of significant quantities of phosphates, for example, up to 10% of sodium hexamethaphosphate during the crystallisation stage. These practices give rise to a product with less whitening power and to other limitations in its application derived from the compatibility with the added compounds.

The known procedures for obtaining the adduct 4Na₂SO₄.2H₂O₂.NaCl are based on crystallisation, such as the one described in the US patent 4.005.182. There is no knowledge that the adduct is obtained on an industrial scale with this procedure.

The current tendencies in washing powders in terms of reducing the energy costs through "post-dosing", the introduction of new more compact presentations (tablets, granules) and an improvement in public health (ecotoxicity, toxicity when inhaled) suggest that the use of formulations should be fostered that are based on innocuous compounds presented in granular form. The invention provides a response to said demand that comprises the production of 4Na₂SO₄.2H₂O₂.NaCl by direct granulation.

It is known from the state of the art the patent US 3979312 where a process for the production of 4Na₂SO₄.2H₂O₂.NaCl is disclosed, in which a sodium sulphate and sodium chloride were mixed with an aqueous solution of 30% hydrogen peroxide. The temperature was kept at 40°C. Now the object of our invention is to improve the process for obtaining said product, avoiding the use of any solution, being used instead of a solution a granulating process where the solids are granulated under addition of hydrogen peroxide.

### DETAILED DESCRIPTION OF THE INVENTION

The invention provides a procedure for obtaining an adduct of the formula 4Na₂SO₄.2H₂O₂.NaCl, in the form of granules, hereinafter, the procedure of the invention, which comprises the mixing and direct granulation of the reactants (Na₂SO₄, NaCl and H₂O₂).

In a particular embodiment of the invention, the procedure of the invention comprises the direct granulation of an intimate mixture of Na₂SO₄ and NaCI finely ground with H₂O₂. In the case that one or both raw materials do not have the appropriate grain size, the procedure of the invention includes a previous stage of grinding and cutting up of the raw material or materials, using conventional methods, until the appropriate grain size is attained. To perform the procedure of the invention, the grain size of the raw materials should be less than 100 µm, preferably lying between 0 and 50 µm. In the case that the raw materials Na₂SO₄ and NaCl had to be ground up, these could be ground up separately or, alternatively, together. Therefore, when both raw materials have the appropriate grain size, the procedure of the invention can be performed by means of direct granulation of an intimate mixture of Na₂SO₄ and NaCl with the appropriate grain size, with H₂O₂. Alternatively, when one or the two raw materials (Na₂SO₄ and NaCl) do not have the appropriate grain size, the procedure of the invention may be performed mixing said raw materials and grinding them up together until the appropriate grain size is obtained. In a particular embodiment, the mean size of the particles of the raw materials (Na₂SO₄ and NaCl) is equal to or less than 50 µm. Once the mixture of raw materials has been prepared with the appropriate grain size, said mixture of raw materials is brought into contact with H₂O₂. The H₂O₂ can be found, in a particular embodiment, in the form of an aqueous solution of H₂O₂, in a variable concentration, for example, between 50 % and 70 %. Once the mixture of raw materials and H₂O₂ is brought into contact, the direct granulation is performed from the resulting mass in appropriate equipment, and the granulates obtained are dried.

In another particular embodiment, the procedure of the invention comprises the direct granulation of Na₂SO₄ with the appropriate grain size, by means of spraying said raw material with a solution of NaCl and H₂O₂ with subsequent drying of the granulates obtained. In a particular embodiment, the Na₂SO₄ has a grain size equal to or lower than 50 µm, for which it has been necessary to perform a previous grinding of the raw material, and said solution of NaCl in H₂O₂ is a solution of NaCl in aqueous solution of H₂O₂, in which the content of NaCl lies between 10 % and 28 %, and is preferably 24 %, and the content of H₂O₂ lies between 10 and 50 %, and is preferably 40 %.

In another particular embodiment, the procedure of the invention comprises the addition of NaCI, solid or in solution, to a paste formed by Na₂SO₄ and H₂O₂ and then performing a direct granulation from the resulting mixture and finally drying the granulate obtained.

The mixing of the components can be performed by any method of agglomeration or physical mixing of all or part of the components.

The raw materials (Na₂SO₄ and NaCl) are neutral salts that are non-toxic and available at a low price. Both salts are used in washing powder formulations used for washing clothes. As raw materials of the procedure of the invention, any source of Na₂SO₄ and NaCl can be used. In a particular embodiment, the source of Na₂SO₄ is chosen from, Thenardite (a natural product that contains Na₂SO₄), Na₂SO₄, fines of Na₂SO₄ [d50 (size of particle corresponding to 50 % on the accumulated curve) equal to or less than 30 µm], and mixtures thereof. In another particular embodiment, the source of NaCl is chosen from Halite (a natural product that contains NaCl), NaCl and mixtures thereof. The procedure of the invention means that it is not necessary to perform a prior purification of the raw materials.

For the embodiment of the invention, the different components of Na₂SO₄, NaCI and H₂O₂ are mixed at a molar ratio lying between 4.0 ± 0.2:1.0 ± 0.2:2.0 ± 0.2 (Na₂SO₄:NaCl:H₂O₂), preferably in a molar proportion of 4.0:1.0:2.0. The procedure of the invention is performed at a temperature lying between 10° C and 100° C, preferably between 35° C and 50° C.

The granulated adduct obtained by means of the procedure of the invention is intrinsically more stable, as it does not decompose until 180° C. This adduct, once dry, contains up to 4.6% of active oxygen. In order to find an application as a whitener in alkaline washing powder formulations, it needs a stabilising additive, phosphonates, etc. Therefore, in a particular embodiment, the procedure of the invention comprises, in addition, the step of adding said stabilising additive accompanying the H₂O₂ or the other components (Na₂SO₄, NaCl). In a particular embodiment, said stabilising additive is of the polyphosphonate type, for example, DEQUEST 2060 from FMC Corp., which is preferably incorporated dissolved in the H₂O₂ used for the granulation.

The procedure of the invention allows the manufacture on an industrial scale of SPS, optionally stabilised, for application in washing powders with full use made of the raw materials. The procedure is energy efficient and is completely compatible with the environment.

Compared to the procedures based on the crystallisation of the SPS adduct, direct granulation simplifies the installations and equipment necessary as only a conventional drying stage is required to evaporate off the water introduced with the H₂O₂. This process does not generate effluents or imply a risk of accidental release of liquids in the process given than solutions are not handled, as is the case in the crystallisation processes. In addition, in the procedure of the invention, there are no losses of yield linked to the individual solubility of the reactant salts or to the impurities of the raw materials themselves, which in solution might lead to the decomposition of H₂O₂.

The incorporation of the stabilising additive dissolved in H₂O₂ guarantees that maximum use is made and that there is a perfect distribution thereof in the SPS.

By way of summary, the invention provides a procedure for the manufacture, on an industrial scale, of granules of innocuous whitener, in a simple, economical and ecological fashion, because, since it does not generate any residue, it is fully compatible with the most rigorous present or future environmental legislation.

### EXAMPLES

By way of example, several typical examples are described of the operational procedure applied.

In Examples 1 to 6, the salts are used in solid form. In Examples 7 and 9, the NaCl is incorporated dissolved in H₂O₂.

In Examples 1, 3 and 7, the pilot granulator was used which consisted of a rotating cylinder inclined at 30° to the vertical equipped with an internal scraper stirrer, the motors of which have several speed regulators, which even allows verification of the sizes of the final granulates avoiding the mechanical reprocessing thereof.

In Examples 4 and 5, a rotating trommel and a basket type extruder, respectively, were used.

In Example 6, the mixture was performed directly in a fluid-bed drier.

In Examples 8 and 9, a malaxator was used in which a paste of Na₂SO₄/H₂O₂ was prepared, to which NaCl was subsequently added.

To dry the products, a fluid bed drier was used (Examples 1 to 7) and a flash type one (Examples 8 and 9).

### EXAMPLE 1

### Example 1A

For this test, 1.701 g of anhydrous Na₂SO₄ and 177 g of NaCl were weighed, both of technical quality. They were mixed together and dry blended such that a powder was obtained with a d50 of 30 µm. Once this had been transferred to the granulator and once this was in operation, the powder cloud was sprayed with 300 g of H₂O₂ 70 %. 5 minutes after finishing the addition of H₂O₂, a drying operation was carried out to give 2.090 of SPS with a content of active oxygen of 4.58 %.

### Example 1B

That indicated in Example 1A was repeated, but dissolving 0.2 g of DEQUEST 2060 in H₂O₂ before addition.

### EXAMPLE 2

For this test, 1.710 g of anhydrous Na₂SO₄ taken directly at the output of an industrial Na₂SO₄ drier, from the fraction denominated fine (< 50 µm), were weighed. The manufacturers of washing powders reject this grain size and it has to be reprocessed. It was mixed in the granulator with 177 g of technical NaCl previously ground (d50 = 50 µm) and then the mixture was sprayed with 300 g of H₂O₂ 70 % with 0.2 g of DEQUEST 2060 added. After drying, 2.087 g of SPS were recovered with a content of active oxygen of 4.54 %.

### EXAMPLE 3

For this test, Thenardite and Halite were used, both natural products extracted from the mines, with an Na₂SO₄ content (d50 = 30 µm) and NaCl (d50 = 30 µm) of 99.1 % and 99.4 %, respectively. The impurities are mainly CaSO₄ (partially as plaster), MgSO₄, Fe oxides and clay. Thenardite and Halite were ground and milled together. The test was performed with the quantities referred to in the previous Examples 1 and 2, including the polyphosphonate necessary for stabilisation in alkaline media. The SPS obtained had an active oxygen content of 4.50 %.

### EXAMPLE 4

For this test, fines of Na₂SO₄ were used (as indicated in Example 2) and ground Halite (d50 = 30 µm). Both salts were mixed in-line by a thread from which a rotating trommel was fed in which axial tubing was inserted with two sprayers through which the H₂O₂ was projected. The dosing of Na₂SO₄ and NaCl (halite) was performed ensuring that the variations between the two did not exceed 10 % of the stoichiometric ratio. H₂O₂ 50% was used in an excess of 5 % with respect to the stoichiometry. MgSO₄ was used as a stabilising agent. It was incorporated dissolved in the H₂O₂.

The pilot installation, with a SPS production capacity of 20 Kg/h, was kept in operation with no interruptions for 5 days, during which time samples of product were taken every 2 hours.

On average, the product, once dry, had an active oxygen content of 4.46 ± 0.12 % and a verified grain-size distribution between 50 and 500 µm. Sieving the product through a stack of meshes of 100, 160, 250 and 325 µm showed a maximum difference of 0.2 % in the content of active oxygen between fractions.

### EXAMPLE 5

For this test, a mixture of Thenardite and Halite ground up together were used (d50 = 30 µm) in the stoichiometric ratio of Na₂SO₄/NaCl. The mixture, at a rhythm of 5 kg/h, fed a mixing thread over which H₂O₂ 70 % was sprayed, supplying the peroxide with a 10 % excess with respect to the stoichiometry. Sodium stannate was used as a stabiliser dissolved in H₂O₂.

The mixture wetted with H₂O₂ was unloaded in a shoot, the size of which ensured a residence time of 5 min, from where an extruder of the basket type was fed, said extruder being fitted with a 1 mm mesh.

The operation was kept in motion for 16 hours, with samples being taken every 2 hours. On average, the dry product showed an active oxygen content of 4.51 ± 0.02.

### EXAMPLE 6

Starting from the mixture of Thenardite (Th) and Halite (H) from Example 5 and using H₂O₂ 50 % (10 % in excess with respect to the stoichiometry) to which MgSO₄ had been added as a stabiliser, a direct granulation test was performed in a batch fluid-bed drier.

The drier in question has a porous bed which allows the passage of hot air, which is extracted, via an internal arm filter, through the upper part of the equipment. The mixture of Th + H (and in the previous examples the moist SPS) is introduced through a side hole. The H₂O₂ is projected by means of a double fluid nozzle towards the bottom. At the end of the test, the drier is emptied through the bed, which, designed as a butterfly valve, rotates 90° and allows the product to drop onto a lid with a fast-closing lid, like a pressure cooker.

In the test corresponding to the example, 2 kg of SPS were obtained. The addition of the mixture of Th + H was performed in one stage. The temperature of the incoming air was kept at 90 ± 5° C. In these conditions, the final product turned out to have a content of active oxygen of 4.56% and a grain size with a d99 (size of particle corresponding to 99% of the cumulative curve) of 230 µm.

### EXAMPLE 7

For this example, fines of Na₂SO₄ were used (as indicated in Example 2) and HCl which had been previously dissolved in H₂O₂. On the one hand, 1.710 g of anhydrous Na₂SO₄ were weighed. These were transferred to the granulator. On the other, a solution of NaCl was prepared containing 177 g of the salt in 520 g of H₂O₂ 40%. DEQUEST 2060 was applied as stabiliser, which was added dissolved in H₂O₂.

The adduct was obtained by spraying the Na₂SO₄ with the aforementioned solution. Once dry, the content of active oxygen turned out to be 4.58%.

### EXAMPLE 8

For this example, fine grains of Na₂SO₄ (as indicated in Example 2) and ground Halite (d50 = 30 µm) were used. In this case, 5.130 g of Na₂SO₄ and 20 g of MgSO₄ (used as a stabiliser) were mixed in a malaxator with 2.050 g of H₂O₂ 30 % forming a paste over which 535 g of NaCl were subsequently powdered. The final mixture, once dried by spin-flash, gave rise to an active oxygen content of 4.50 %.

### EXAMPLE 9

For this example, the procedure and the quantities of raw materials indicated in Example 8 were used but with the exception of introducing NaCI and MgSO₄ dissolved in 1.375 g of H₂O. The final product, after being dried in a spin-flash apparatus, gave an active oxygen content of 4.56 %.

### Stability of the SPS

Two types of study have been performed, one to evaluate the intrinsic stability of SPS, using the sample obtained in Example 1A, and another to determine the stability of SPS in alkaline media, using the sample obtained in Example 1B

The intrinsic stability of SPS is very high, as it does not decompose until it reaches a temperature of 180° C. In normalised tests normally applied to SPB and PCS, it showed greater stability than those persalts. This is logical as Na₂SO₄ and NaCl are neutral salts.

In order to test the stability in alkaline medium, the fact that the incorporation of SPS would have a typical washing powder formulation with a content of 20 % of Na₂SO₄ and 10 % of SPB.4H₂O was taken into account. Thus, to provide both active oxygen and SPB.4H₂O, 25% of SPS was required which, in turn, is equivalent to a little more than 20% of Na₂SO₄.

On eliminating the SPB, the washing powder also loses the alkalinity provided by the borate. Thus, to compensate for this deficiency, and, at the same time, to restore the initial mass (30% of the washing powder) it was decided to add 5% of anhydrous Na₂CO₃.

The SPS mixture (sample from Example 1B) + anhydrous Na₂CO₃ was prepared by joint milling, obtaining a powder with a d50 of 30 µm. In a second stage, this powder was dry blended and ground up with a dry base of alkaline detergent prepared by atomisation.

The final formulation, the composition of which was: 25% of SPS, 20% of Na₂CO₃, 20 % of sodium tripolyphosphate (TPF), 15% of sodium silicate (molar ratio 2:1), 15% of alkyl (C12) sodium benzenosulphonate, 4% of H₂O, 1% of carboxymethyl cellulose (CMC), was introduced into semi-permeable bags and submitted, in an incubator, to a temperature of 50° C and a relative humidity of 90 % for three months. Each week, the residual activity was checked, showing a loss of less than 10% at the end of the test.

The sample from Example 1B, lacking the stabilising additive, on being submitted to the same test as the sample from Example 1B, completely lost its activity before the end of the 3^{rd} week of incubation.

## Claims

1. A process for obtaining an intrinsically stable adduct of formula 4Na₂SO₄.2H₂O₂.NaCl selected from
A) direct granulation of an intimate blend of Na₂SO₄ and NaCl, with a grain size equal to or less than 100 µm, with H₂O₂;
B) direct granulation of Na₂SO₄, with a grain size equal to or less than 100 µm, by means of spraying with a solution of NaCl in H₂O₂; and
C) direct granulation of a blend formed by addition of NaCl, solid or in solution, to a paste formed by Na₂SO₄ and H₂O₂.

2. A process according to claim 1, alternative A), in which said intimate blend of Na₂SO₄ and NaCI has a grain size lying between 0 and 50 µm.

3. A process according to any of claims 1, alternative A), or 2, in which the H₂O₂ is found in the form of an aqueous solution, with a concentration lying between 50 % and 70 %.

4. A process according to claim 1, alternative B), in which said Na₂SO₄ has a grain size lying between 0 and 50 µm.

5. A process according to any of claims 1, alternative B), or 4, in which the NaCl content in said solution of NaCI in H₂O₂ lies between 10 % and 28 %, and is preferably 24 %, and the content of H₂O₂ in said solution of NaCI lies between 10 % and 50 %, and is preferably 40 %.

6. A process according to any of the previous claims, in which the molar proportions between Na₂SO₄, NaCl and H₂O₂ lie between 4.0 ± 0.2:1.0 ± 0.2:2.0 ± 0.2, and is preferably the proportion 4.0:1.0:2.0.

7. A process according to any of the previous claims, in which the temperature lies between 10° C and 100° C, and is preferably between 35° C and 50° C.

8. A process according to any of the previous claims, which comprises the agglomeration or physical mixing of all or part of the components.

9. A process according to any of the previous claims, in which the raw materials comprise Thenardite and Halite.

10. A process according to any of claims 1 to 8, in which the raw materials comprise fines of Na₂SO₄ and NaCl.

11. A process according to any of claims 1 to 8, in which prior purification of the raw materials is not required.

12. A process according to any of the previous claims that comprises, in addition, the stabilisation of the adduct obtained by means of the incorporation of a stabilising additive.

13. A process according to claim 12, in which the incorporation of said stabilising adduct is performed accompanying the H₂O₂ or Na₂SO₂ or the NaCl

14. A process according to any of claims 12 or 13, in which said stabilising additive is selected from salts of Mg, stannates, dipicolinic acid, phosphonates and mixtures thereof.

## Patentansprüche

1. Ein Verfahren zum Erhalt eines an sich stabilen Addukts der Formel 4Na₂SO₄2H₂O₂NaCl ausgewählt aus
A) direkte Granulierung eines bekannten Gemisches aus Na₂SO₄ und NaCl mit einer Korngrösse gleich oder geringer als 100 µm mit H₂O₂
B) direkte Granulation von Na₂SO₄ mit einer Korngrösse gleich oder geringer als 100 µm durch Besprühen mit einer Lösung aus NaCl in H₂O₂; und
C) direkte Granulierung einer Mischung, die durch Zugabe von NaCl, fest oder in Lösung, zu einer Paste aus Na₂SO₄ und H₂O₂ gebildet wird.

2. Ein Verfahren gemäss Anspruch 1, Alternative A), bei dem das besagte bekannte Gemisch aus Na₂SO₄ und NaCl eine Korngrösse zwischen 0 und 50 µm liegt.

3. Ein Verfahren gemäss Anspruch 1, Alternative A) oder 2, bei dem das H₂O₂ in Form einer wässrigen Lösung gefunden wird, mit einer Konzentration zwischen 50% und 70%.

4. Ein Verfahren gemäss Anspruch 1, Alternative B), bei dem das besagte Na₂SO₄ eine Korngrösse zwischen 0 und 50 µm aufweist.

5. Ein Verfahren gemäss einem der Ansprüche 1, Alternative B oder 4, bei dem der Gehalt an NaCl in besagter Lösung von NaCl in H₂O₂ zwischen 10% und 28% liegt und vorzugsweise 24% beträgt und der Gehalt an H₂O₂ in besagter Lösung von NaCl zwischen 10% und 50% liegt und vorzugsweise 40% beträgt.

6. Ein Verfahren gemäss einem der vorangegangenen Ansprüche, bei dem das Molverhältnis zwischen Na₂SO₄, NaCl und H₂O₂ zwischen 4,0 ± 0,2: 1,0 ± 0,2: 2,0 ± 0,2 liegt und vorzugsweise das Verhältnis 4,0:1,0:2,0 ist.

7. Ein Verfahren gemäss einem der vorangegangenen Ansprüche, bei dem die Temperatur zwischen 10°C und 100°C liegt und vorzugsweise zwischen 35°C und 50°C.

8. Ein Verfahren gemäss einem der vorangegangenen Ansprüche, das die Agglomeration oder physische Vermischung aller oder einiger der Komponenten umfasst.

9. Ein Verfahren gemäss einem der vorangegangenen Ansprüche, bei dem die Rohmaterialien Thenadit und Halit umfassen.

10. Ein Verfahren gemäss einem der Ansprüche 1 bis 8, bei dem die Rohmaterialien Feinstoffe von Na₂SO₄ und NaCl umfassen.

11. Ein Verfahren gemäss einem der Ansprüche 1 bis 8, bei dem die vorherige Reinigung der Rohmaterialien nicht notwendig ist.

12. Ein Verfahren gemäss einem der vorangegangenen Ansprüche, das zusätzlich die Stabilisierung des erhaltenen Addukts umfasst, das durch Zugabe eines Stabilisierungsadditivs erhalten wurde.

13. Ein Verfahren gemäss Anspruch 12, bei dem die Zugabe des besagten Stabilisierungsadditivs durchgeführt wird, indem es das H₂O₂ oder Na₂SO₂ oder NaCl begleitet.

14. Ein Verfahren gemäss einem der Ansprüche 12 oder 13, bei dem das besagte Stabilisierungsadditiv zwischen Magnesiumsalzen, Stannaten, Dipicolsäure, Phosphonaten und Mischungen hieraus gewählt wird.

## Revendications

1. Un procédé pour obtenir un adduit intrinsèquement stable de formule 4Na₂SO₄2H₂O₂NaCl sélectionné parmi
A) une granulation directe d'un mélange intime de Na₂SO₄ et NaCl, avec une granulométrie égale ou inférieure à 100 µm, avec H₂O₂ ;
B) une granulation directe de Na₂SO₄, avec une granulométrie égale ou inférieure à 100 µm, au moyen de pulvérisation avec une solution de NaCl dans H₂O₂ ; et
C) une granulation directe d'un mélange formé par addition de NaCl solide o en solution, à une pâte formée par Na₂SO₄ et H₂O₂.

2. Un procédé selon la revendication 1, alternative A), dans lequel ledit mélange intime de Na₂SO₄ et NaCl a une granulométrie allant de 0 à 50 µm.

3. Un procédé selon l'une quelconque des revendications 1, Alternative A), ou 2, dans lequel H₂O₂ se trouve sous forme d'une solution aqueuse, avec une concentration allant de 50% à 70%.

4. Un procédé selon la revendication 1, alternative B), dans lequel Na₂SO₄ a une granulométrie allant de 0 à 50 µm.

5. Un procédé selon l'une quelconque des revendications 1, alternative B), ou 4, dans lequel le contenu de NaCl dans ladite solution de NaCl dans H₂O₂ est de 10 à 28%, et de préférence 24%, et le contenu de H₂O₂ dans ladite solution de NaCl est de 10 à 50%, et de préférence 40%.

6. Un procédé selon l'une quelconque des revendications antérieures, dans lequel les proportions molaires parmi Na₂SO₄, NaCl et H₂O₂ se trouvent entre 4,0 ±0,2:1,0±0,2:2,0±0,2, et la proportion préférée est 4,0:1,0:2,0.

7. Un procédé selon l'une quelconque des revendications antérieures, dans lequel la température se trouve entre 10°C et 100°C, et de préférence entre 35°C et 50°C.

8. Un procédé selon l'une quelconque des revendications antérieures, qui comprend l'agglomération ou le mélange physique de tous ou d'une partie des composants.

9. Un procédé selon l'une quelconque des revendications antérieures, dans lequel les matières primes comprennent la thernadite et l'halite.

10. Un procédé selon l'une quelconque des revendications 1 à 8, dans lequel les matières primes comprennent des fines de Na₂SO₄, et NaCl.

11. Un procédé selon l'une quelconque des revendications 1 à 8, dans lequel la purification préalable des matières premières n'est pas nécessaire.

12. Un procédé selon l'une quelconque des revendications antérieures comprenant, en outre, la stabilisation de l'adduit obtenu au moyen de l'incorporation d'un additif stabilisateur

13. Un procédé selon la revendication 12, dans lequel l'incorporation dudit adduit stabilisateur est menée à bout accompagné de H₂O₂ ou Na₂SO₄ ou NaCl.

14. Un procédé selon l'une quelconque des revendications 12 ou 13, dans lequel ledit additif stabilisateur est sélectionné parmi les sels de Mg, stannates, acide dipicolinique, phosphonates et leurs mélanges.
